(19)

Europäisches
Patentamt

European
Patent Office

Office européen
des brevets

(11)    **EP 2 941 843 B1**

(12)    **FASCICULE DE BREVET EUROPEEN**

(45) Date de publication et mention
de la délivrance du brevet:
**29.03.2017   Bulletin 2017/13**

(21) Numéro de dépôt: **14831024.6**

(22) Date de dépôt: **23.12.2014**

(51) Int Cl.:
***H04L 9/00*** *(2006.01)*

(86) Numéro de dépôt international:
**PCT/FR2014/053546**

(87) Numéro de publication internationale:
**WO 2015/097413 (02.07.2015 Gazette 2015/26)**

(54)    **PROCEDE DE TRAITEMENT COMPARATIF SECURISE**

**VERGLEICHENDES GESICHERTES VERARBEITUNGSVERFAHREN**

**SECURED COMPARATIVE PROCESSING METHOD**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2013   FR 1363557**

(43) Date de publication de la demande:
**11.11.2015   Bulletin 2015/46**

(73) Titulaire: **Safran Identity & Security
92130 Issy-les-Moulineaux (FR)**

(72) Inventeurs:
• **BERTHIER, Maël**
  **F-92130 Issy Les Moulineaux (FR)**
• **SERVANT, Victor**
  **F-92130 Issy Les Moulineaux (FR)**

(74) Mandataire: **Regimbeau
20, rue de Chazelles
75847 Paris Cedex 17 (FR)**

(56) Documents cités:
**FR-A1- 2 847 402     US-B1- 6 408 075**

• **Thomas Plos ET AL: "Evaluation of Side-Channel
Preprocessing Techniques on
Cryptographic-Enabled HF and UHF RFID-Tag
Prototypes", Workshop on RFID Security 2008
(RFIDSec08), 11 juillet 2008 (2008-07-11),
XP055144034, Extrait de l'Internet:
URL:http://events.iaik.tugraz.at/RFIDSec08
/Papers/Publication/11 - Plos - Side-Channel
Preprocessing - Paper.pdf [extrait le 2014-10-02]**
• **BENOIT CHEVALLIER-MAMES ET AL: "Low-Cost
Solutions for Preventing Simple Side-Channel
Analysis: Side-Channel Atomicity",
INTERNATIONAL ASSOCIATION FOR
CRYPTOLOGIC RESEARCH,, vol.
20031112:162251, 12 novembre 2003
(2003-11-12), pages 1-16, XP061000656,**

EP 2 941 843 B1

**Description**

DOMAINE DE L'INVENTION

La présente invention concerne les procédés de traitement comparatifs sécurisés.

Elle trouve en particulier avantageusement application pour la sécurisation des traitements de comparaison qui peuvent être mis en oeuvre sur une carte à puce : authentification de code PIN par exemple, ou encore vérifications de certificats.

ETAT DE LA TECHNIQUE

De nombreux composants électroniques mettent en oeuvre des opérations de comparaison entre des données secrètes et des données à soumettre à la comparaison, appelées dans la suite « données d'épreuve ». Ces opérations de comparaison peuvent faire l'objet d'attaques pour déterminer lesdites données secrètes.

Certaines de ces attaques, dites « side channels », consistent à étudier le comportement du composant (par exemple une carte à puce), notamment en termes de fuites électromagnétiques, ou encore en termes de variations de consommation électrique, ou de temps de réponse.

En effet si, au cours d'une comparaison entre une valeur secrète et une valeur d'épreuve, la valeur d'épreuve correspond à la valeur secrète, le composant va exécuter des opérations différentes des autres cas (déclenchement d'un programme déterminé, etc.).

Ainsi, en analysant certains paramètres de fonctionnement du composant lors de comparaisons successives, il est possible de mettre en évidence des différences de comportement lorsque les données d'épreuve soumises correspondent aux données secrètes et ainsi de récupérer les données secrètes. Pour parer ce type d'attaque, diverses solutions ont été développées.

Ces solutions comprennent, par exemple, l'implémentation de programmes dits « symétriques », comme celui proposé dans la demande FR2813468. De tels programmes symétriques visent à effectuer des opérations similaires en cas de correspondance ou non entre les données comparées, afin par exemple que les profils de consommation électrique du système soient identiques.

De telles solutions à base de programmes symétriques présentent néanmoins l'inconvénient d'être très difficiles à mettre en oeuvre. En effet, même si un programme symétrique arrivait à minimiser, voire éliminer des différences de comportement de l'opération de comparaison proprement dite, le succès de la comparaison implique nécessairement une différence de traitement postérieur, par rapport à un échec de cette comparaison.

Une autre solution a été de générer, dans les programmes exécutés pendant la comparaison ou après celle-ci, en cas d'échec comme en cas de succès, des délais d'exécution aléatoires. Outre la gène nécessairement occasionnée par ces délais, cette solution présente en outre l'inconvénient d'être facilement détectable par un attaquant. A mesure des comparaisons infructueuses réalisées, celui-ci peut constater l'absence de signature particulière des faux identifiants (c'est-à-dire des données secrètes distinctes des données secrètes de contrôle).

L'article "Evaluation of Side-Channel Preprocessing Techniques on Crptographic-Enabled HF and UHF RFID-Tag Prototypes" publié par T. Plos et al. le 11 juillet 2008 au sein du "Workshop on RFID Security 2008 (RFIDSec08)" expose un cachage dans le domaine temporel de l'activité d'un compsant RFID à l'aide d'une séquence d'opérations factrices.

L'article "Low-Cost Solutions for Preventing Simple Side-Channel Analysis" publié par B. Chevalier et al. le 12 novembre 2003 expose des techniques de conversion d'algorithmes afin de les protéger contre les attaques par canaux auxiliaires.

PRESENTATION DE L'INVENTION

Par conséquent, l'invention a pour but de proposer un procédé d'authentification sécurisé plus résistant aux attaques « side channels » que les procédés sécurisés de l'art antérieur, et ne présentant pas les inconvénients ci-dessus mentionnés.

A cet égard, il est proposé un procédé de traitement comparatif sécurisé du type dans lequel un processeur d'un composant électronique compare un jeu de données d'épreuve qu'il reçoit en entrée à des données secrètes principales stockées dans ledit composant électronique, caractérisé en ce que le processeur exécute, en parallèle de la comparaison aux données secrètes, une série d'opérations complémentaires sur le jeu de données d'épreuve qui génèrent sur le composant électronique une variation de comportement qui est fonction des données d'épreuve qu'il reçoit en entrée et qui s'ajoute à la variation de comportement liée à la comparaison aux données secrètes principales, la série d'opérations complémentaires comprenant une opération de base répétée K fois, et l'exécution de ladite série étant précédée d'un ajustement de paramètres d'exécution de ladite série, les paramètres comprenant : l'identifiant de la suite d'opérations de base à exécuter, la suite d'opérations de base étant comprise dans un ensemble d'opérations de base prédéfinies, et le nombre K d'exécutions de la suite d'opérations de base, l'ensemble des paramètres d'exécution ajustés étant spécifique au jeu de données d'épreuves reçu par le composant électronique.

On notera que de cette façon, les fuites électromagnétiques, variations de courant, etc... qui peuvent être repérées par un observateur externe sont liées :

- aux opérations communes qui seront semblables pour toutes valeurs soumises ;

- aux bruits qui seront différents quelques soient la comparaison même en utilisant la même valeur ;
- aux données secrètes (si la valeur soumise correspond au secret) ;
- aux données d'épreuve (variation de comportement lié à celles-ci).

Ainsi, après dé-bruitage, la fuite ou la variation de consommation totale, est la somme d'une composante commune, d'une composante liée à la comparaison aux données secrètes et d'une composante liée aux opérations complémentaires, laquelle est fonction des données d'épreuve.

Il est alors impossible pour un observateur externe de distinguer dans la variation de comportement du composant celle qui correspond à la comparaison aux données secrètes et celle qui correspond aux opérations complémentaires, laquelle est fonction des données d'épreuve.

L'invention concerne également un composant électronique d'authentification comprenant une mémoire dans laquelle sont stockées des données secrètes de contrôle principales, et un processeur, le composant électronique étant caractérisé en ce que le processeur est adapté pour mettre en oeuvre le procédé proposé.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un exemple de composant électronique d'authentification sécurisé et des échanges d'information avec un terminal d'authentification.
- La figure 2 représente les principales étapes d'un exemple de mise en oeuvre du procédé selon un mode de réalisation de l'invention.
- La figure 3 détaille certaines étapes déjà représentées en figure 2.

DESCRIPTION DETAILLEE D'EXEMPLES DE REALISATION

On se place dans la suite du texte, dans le cadre purement illustratif d'un procédé d'authentification de codes PIN, d'autres applications de traitements comparatifs sécurisés étant bien entendu envisageables.

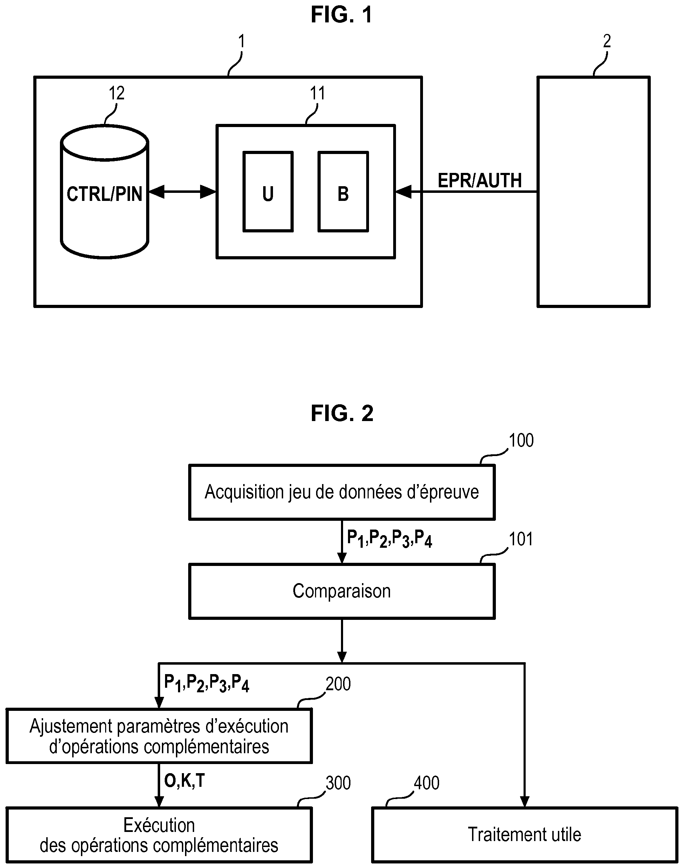

En référence à la **figure 1**, on a représenté un composant électronique d'authentification 1, permettant de mener à bien une authentification par comparaison entre un jeu de données secrètes de contrôle CTRL et un jeu de données d'épreuve EPR, ces données étant par exemple des données d'authentification AUTH. Ces données sont par exemple des codes chiffrés.

Ce composant 1 comprend une électronique permettant la mise en oeuvre de cette comparaison, par exemple un processeur 11, adapté pour communiquer avec une mémoire 12, dans laquelle sont stockées les données secrètes de contrôle PIN. Le composant 1 est par exemple du type carte à puce.

Le composant 1 est en outre apte à dialoguer avec un terminal 2, ce terminal étant une interface d'acquisition des données d'épreuve EPR à comparer au jeu de données secrètes de contrôle CTRL.

De manière connue en soi, le terminal 2 est configuré pour procéder à l'acquisition d'un jeu de données d'épreuve, telles que des données d'authentification AUTH, à comparer au jeu de données secrètes de contrôle CTRL. A titre d'exemple non limitatif, un individu peut composer un code correspondant aux données d'authentification AUTH, pour comparaison avec un code PIN.

Le terminal 2 est également configuré pour communiquer ensuite au processeur 11 les données d'épreuve EPR, afin que le processeur compare lesdites données d'épreuve avec les données secrètes de contrôle CTRL.

La mémoire 12 du composant 1 stocke un programme de traitement utile U exécutable par le processeur 11.

Dans le cas d'un procédé d'authentification, la correspondance entre le jeu de données secrètes et le jeu de données d'épreuve assure l'authentification de l'individu et entraîne l'exécution par le processeur 11 du programme de traitement utile U. Cette correspondance autorise l'accès de l'individu à un service dédié, pouvant être dans le cas d'une carte à puce, à titre d'exemple non limitatif, un service de paiement, ou l'accès à un service de téléphonie, etc.

La mémoire 12 du composant 1 stocke également un programme de brouillage B exécutable par le processeur 11, également appelé dans la suite plus simplement « brouilleur » B.

Le brouilleur B est plus particulièrement configuré pour mettre en oeuvre une série d'opérations complémentaires destinées, comme on le verra dans la suite, à masquer l'exécution ou la non-exécution du programme U selon le résultat de la comparaison.

L'exécution de la série d'opérations complémentaires du brouilleur B est contrôlée par un ensemble de paramètres d'exécution.

Une série donnée d'opérations complémentaire exécutée dépend du dernier jeu de données d'épreuves reçu par le composant 1. On comprend ainsi qu'à chaque jeu de données d'épreuves susceptible d'être acquis par le terminal 2 correspond un ajustement distinct des paramètres d'exécution, et donc une exécution spécifique de la série d'opérations complémentaires sollicitant de façon particulière le processeur 11.

Le programme de brouillage B est configuré pour mettre en oeuvre via le processeur 11 des suites d'opérations prédéfinies, dites « de base ». Chacune de ces suites d'opérations de base peut typiquement être implémentée sous la forme d'une fonction de code du programme de brouillage B spécifique qui correspond à un jeu respectif d'instructions du processeur 11.

Les suites d'opérations de base peuvent être très simples (copie, affectation, etc.) ou bien mettre en oeuvre des instructions du processeur 11 plus complexes. On supposera simplement que chaque suite d'opérations de base prédéfinie sollicite le processeur 11 de façon distincte en termes de charge de calcul et/ou de temps de calcul, et qu'elle provoque un surplus de consommation électrique par le composant 1.

Dans un mode de réalisation détaillé ci-après, les paramètres d'exécution sont au nombre de trois.

Un premier paramètre d'exécution du programme B est un identifiant O d'une suite d'opérations de base à exécuter parmi toutes celles mise à disposition. Le premier paramètre d'exécution peut par exemple être un indice permettant de déterminer, dans un tableau d'adresses, l'adresse d'exécution de la fonction de code correspondant à la suite d'opérations de base à exécuter.

Un deuxième paramètre d'exécution du programme B est un entier K définissant un nombre d'exécutions de la suite d'opérations de base (identifiée par le premier paramètre d'exécution) à faire exécuter par le processeur 11.

La série d'opérations est ainsi constituée d'une boucle à K itérations, chaque itération étant la suite d'opérations de base définie par le premier paramètre d'exécution O.

Un troisième paramètre d'exécution du programme B peut être un délai T d'attente entre l'instant d'exécution de chaque itération de la boucle constituée de la suite d'opérations de base répétée K fois.

Par exemple, dans le cas d'un code PIN à quatre chiffres, compris entre 0 et 9, 10000 jeux de données d'épreuve différentes sont susceptibles d'être reçus par le composant 1 ; 10000 triplets de paramètres d'exécution différents doivent donc correspondre à ces 10000 jeux de données d'épreuves.

*Procédé d'authentification*

Sur la **figure 2**, on a représenté les principales étapes du procédé selon l'invention. La première étape 100, évoquée ci-avant, est l'acquisition par le processeur 11 d'un jeu de données d'épreuve EPR, via l'acquisition et la transmission par le terminal 2.

Le jeu de données d'épreuve EPR est typiquement constitué de (ou du moins représenté) par M valeurs acquises par le terminal 2. Dans le cas particulier d'une authentification par code PIN, cas que l'on prendra en exemple dans la suite, les M valeurs peuvent quatre entiers compris entre 0 et 9, respectivement P1, P2, P3 et P4.

Le processeur 11 compare ensuite les données d'épreuve EPR aux données secrètes de contrôle CTRL. Il met ainsi en oeuvre une opération de comparaison 101 sur les données secrètes de contrôle CTRL.

En cas de correspondance entre les données secrètes de contrôle CTRL et les données d'épreuve EPR, le processeur exécute le programme U de traitement utile correspondant au succès de la comparaison 101. Les opérations mises en oeuvre par le programme U (par exemple une authentification) sont référencées 400.

En parallèle ou à la suite de cette comparaison 101 ou de cette authentification 400, le processeur 11 exécute les étapes suivantes au moyen du programme de brouillage B.

Dans une étape d'ajustement 200, le processeur 11 ajuste à partir du jeu de données d'épreuve EPR reçu, ici constitué par le quadruplet (P1, P2, P3, P4), les trois paramètres d'exécution décrits plus haut : l'identifiant de la suite d'opérations de base à exécuter, le nombre K d'exécutions de cette suite, et le délai T entre deux exécutions successives de la suite d'opérations de base parmi les K exécutions prévues.

Dans une étape d'exécution 300, le processeur 11 exécute la série d'opérations complémentaires d'après les paramètres d'exécution déterminés au cours de l'étape d'ajustement 200.

Les étapes d'ajustement 200 et d'exécution 300 peuvent être répétées après chaque comparaison 101 effectuée pour un nouveau jeu de données d'épreuve acquis par le terminal 2.

*Ajustement des paramètres d'exécution*

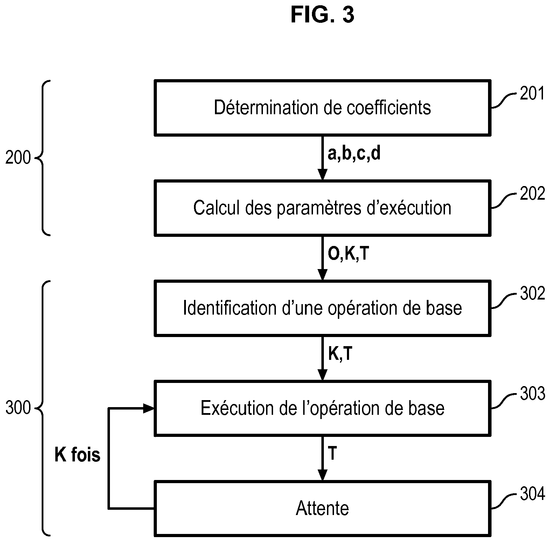

En référence à la **figure 3**, l'étape d'ajustement 200 des paramètres d'exécution comprend le calcul 202 des paramètres d'exécution O, K, T par mise en oeuvre de trois fonctions du programme de brouillage B : une fonction F1 prenant en entrée la paire de valeurs (P1, P2) et produisant un premier des trois paramètres d'exécution, une fonction F2 prenant en entrée la valeur P3 et produisant un deuxième des trois paramètres d'exécution, et une fonction F3 prenant en entrée P4, et produisant le troisième et dernier paramètre d'exécution.

Le triplet de fonctions F1, F2, F3 est choisi de façon à garantir l'unicité du triplet (O, K, T) de paramètres d'exécution obtenu à partir du quadruplet de valeurs P1 à P4.

Le premier paramètre d'exécution est quelconque : il peut être l'identifiant O de la suite d'opérations de base, le nombre K, ou bien le délai T.

Les trois paramètres d'exécution O, K, T peuvent être par exemple produits au moyen des trois fonctions F1, F2 et F3 suivantes:

$$F1(P1, P2) = aP1 + bP2$$

$$F2(P3) = cP3$$

$$F3(P4) = dP4$$

où a, b, c et d sont des coefficients prédéterminés.

Un premier mode de réalisation pratique des fonctions F1, F2 et F3 peut être le suivant :

$$T = 10 * P1 + P2$$

$$K = P3$$

$$O = P4$$

Un deuxième mode de réalisation pratique des fonctions F1, F2 et F3 peut être le suivant :

$$K = 11 * P1 + 2 * P2$$

$$T = P3$$

$$O = P4$$

Les coefficients a, b, c, d peuvent être des valeurs variables déterminées au cours d'une étape 201 précédant l'étape de calcul 202. On pourra avantageusement choisir les coefficients a et b comme des entiers dont l'un au moins est supérieur à 10 tels que a et b sont premiers entre eux, ce qui permet de garantir l'injectivité de la fonction F1 sans que cette fonction soit complexe à implémenter.

Chacun des coefficients a, b, c et d peut être associé à un tableau stocké dans la mémoire la mémoire 12 ou directement dans le code du programme B. Chaque tableau consigne des valeurs sélectionnables pour le coefficient correspondant.

Le programme B procède au cours de l'étape 202 à une lecture circulaire des quatre tableaux de coefficients pour déterminer les coefficients a, b, c, et d à utiliser lors de l'exécution des fonction F1, F2 et F3 : pour chaque nouveau jeu de données d'épreuve reçu par le composant 1, le programme B lit dans une nouvelle valeur du tableau de coefficient (par exemple, la valeur d'indice immédiatement supérieur à l'indice de la dernière valeur lue dans le tableau). Après que le programme B a lu la dernière valeur d'un des tableaux de coefficients, le programme B relit la première valeur de ce tableau. Le tableau peut en variante être parcouru en lecture par ordre d'indice décroissant.

Les quatre tableaux de coefficients sont de préférence de longueurs (en nombre de coefficients) différentes, de façon à éviter une répétition trop fréquente d'un quadruplet de valeurs a, b, c, d, et donc d'augmenter la variabilité des opérations effectuées. Les longueurs des tableaux peuvent en plus être choisies premières entre elles pour minimiser la fréquence de telles répétitions.

La mise en oeuvre des fonctions F1, F2 et F3 produit donc les trois paramètres d'exécution que sont l'identifiant d'opération de base O, le nombre K et le délai T définis précédemment.

*Exécution de la série d'opérations complémentaires*

Le processeur procède ensuite à l'exécution 300 des opérations complémentaires au moyen du programme de brouillage B, l'étape 300 comprenant les sous-étapes suivantes mises en oeuvre une fois que les paramètres O, K et T ont été ajustés.

Le processeur 11 identifie 302 une adresse d'exécution de la suite d'opérations de base identifiée par l'identifiant O. Cette adresse peut être typiquement déterminée par inspection d'un tableau de pointeurs de fonctions correspondant chacun à une suite d'opérations de base disponible, le tableau étant embarqué dans le code du brouilleur B, l'identifiant étant utilisé comme indice de lecture dans le tableau de pointeurs.

Le processeur 11 exécute ensuite 303 une première fois la suite d'opérations de base identifiée par l'identifiant O.

Dans une sous-étape d'attente 304, le processeur 11 attend pendant une durée égale à T avant d'exécuter 303 une deuxième fois la suite d'opération de base. Cette étape est typiquement réalisée par démarrage d'un compteur de temps (« timer » en anglais) configuré avec un délai d'expiration égal au délai T. A l'expiration du compteur (au terme du délai T), une procédure d'interruption est déclenchée qui lance l'exécution suivante de l'étape 303.

On veillera de préférence à ce que le délai T ne soit pas d'une longueur disproportionnée par rapport à la durée d'exécution de la série d'opérations supplémentaires pour éviter des contraintes de performance.

L'exécution de la série d'opérations complémentaires génère une variation du comportement du processeur 11, et donc plus généralement du composant 1, cette variation de comportement s'ajoutant à la variation de comportement liée à la comparaison aux données secrètes principales (CTRL, PIN).

Ainsi, un observateur extérieur ne peut distinguer le comportement du composant 1 selon qu'il y a ou non succès de la comparaison 101.

Par ailleurs, le triplet de paramètres (O, K, T) de l'exécution 300 de la série d'opérations complémentaire étant propre à chaque quadruplet de valeurs P1-P4 constituant un jeu de données d'épreuves, le comportement externe du composant 1 se trouve modifié, alors même qu'il ne s'agit pas d'une authentification ou d'un succès de la comparaison entre les données d'épreuve et les données de contrôle.

De la sorte, un attaquant qui observerait la consommation électrique du composant 1 pendant l'étape de comparaison pourrait considérer que le profil de consommation de courant particulier du composant 1 provient d'un programme exécuté en cas d'authentification. Il en déduirait donc que les données d'épreuve EPR entrées correspondent aux données secrètes de contrôle CTRL, et serait induit en erreur.

On a donc développé un procédé d'authentification de mise en oeuvre aisée, plus sécurisé que les procédés précédemment développé, et particulièrement peu coûteux en temps de calcul que l'art antérieur.

Les étapes décrites ci-dessus peuvent être répétées à chaque fois qu'un nouveau jeu de données d'épreuves est reçu par le composant électronique 1.

On notera en particulier que l'étape d'attente 304 peut être mise en oeuvre entre la dernière exécution d'une première suite d'opérations de base pour une précédente comparaison, et la première exécution d'une deuxième suite d'opérations de base pour une comparaison courante.

*Variantes de réalisation*

Le procédé selon l'invention n'est pas limité aux modes de réalisation décrits précédemment.

Les coefficients a, b, c, d peuvent être des valeurs fixes pour chaque comparaison effectuée par le composant électronique 1, ou bien un partie d'entre eux.

Le procédé peut être généralisé à des valeurs constituant un jeu de données d'épreuves P1 à P4 qui sont comprises entre 0 et L ; les paramètres a et b pourront alors être des entiers supérieurs à L+1 tels que a et b sont premiers entre eux.

Le procédé peut être généralisé à des jeux de données d'épreuves constitués de M valeurs P1 à PM, et à un nombre de paramètres d'exécution en nombre N inférieur à M. Chaque paramètre d'exécution (d'indice i) est calculé comme l'image, par une fonction Fi injective, d'une ou plusieurs valeurs associées audit paramètre parmi les M valeurs.

## Revendications

**1.** Procédé de traitement comparatif sécurisé du type dans lequel un processeur (11) d'un composant électronique (1) compare (101) un jeu de données d'épreuve (EPR, AUTH) qu'il reçoit en entrée à des données secrètes principales (CTRL, PIN) stockées dans ledit composant électronique (1), **caractérisé en ce que** le processeur (11) exécute (300), en parallèle de la comparaison (101) aux données secrètes (CTRL, PIN), une série d'opérations complémentaires sur le jeu de données d'épreuve (EPR, AUTH) qui génèrent sur le composant électronique (1) une variation de comportement qui est fonction des données d'épreuve (EPR, AUTH) qu'il reçoit en entrée et qui s'ajoute à la variation de comportement liée à la comparaison aux données secrètes principales (CTRL, PIN), la série d'opérations complémentaires exécutée (300) comprenant une suite d'opérations de base répétée K fois, et l'exécution (300) de ladite série étant précédée d'un ajustement (200) de paramètres d'exécution de ladite série, les paramètres comprenant :

- l'identifiant (O) de la suite d'opérations de base à exécuter, la suite d'opérations de base étant comprise dans un ensemble d'opérations de base prédéfinies,
- le nombre K d'exécutions de la suite d'opérations de base, l'ensemble des paramètres d'exécution (O,K) ajustés étant spécifique au jeu de données d'épreuves reçu par le composant électronique (1).

**2.** Procédé selon la revendication 1, dans lequel l'ensemble des paramètres d'exécution (O, K, T) comprend également un délai d'attente (T) entre deux exécutions successives de l'opération de base répétée K fois.

**3.** Procédé selon l'une des revendications 1 et 2, dans lequel le jeu de données d'épreuves est constitué de M valeurs, et les paramètres d'exécution sont en nombre N inférieur à M, chaque paramètre d'exécution (O, K, T) étant calculé (202) comme l'image, par une fonction injective respective, d'une ou plusieurs valeurs associées audit paramètre parmi les M valeurs.

**4.** Procédé selon la revendication 3, dans lequel les M valeurs sont des première (P1), deuxième (P2), troisième (P3) et quatrième (P4) valeurs entières comprises chacune entre 0 et L, dans lequel N=3, et :

- un premier des paramètres d'exécution (O, K, T) est égal à

$$aP1 + bP2,$$

où a et b sont deux premiers coefficients entiers dont l'un au moins est supérieur à L+1 tels que a et b sont premiers entre eux,
- un deuxième des paramètres d'exécution (O, K, T) est égal à la troisième valeur (P3) multipliée par un deuxième coefficient prédéterminé (c), et
- le troisième des paramètres d'exécution (O, K, T) est égal à la quatrième valeur (P4) multipliée par un troisième coefficient prédéterminé (d).

**5.** Procédé selon l'une des revendications 3 et 4, dans lequel au moins un des coefficients (a, b, c, d) varie à chaque nouveau jeu de données d'épreuve reçus par le composant électronique (1).

6. Procédé selon l'une des revendications 4 et 5, dans lequel, chaque coefficient (a, b, c, d) variable est sélectionné (201) par lecture circulaire d'un tableau de coefficients associé et stocké dans le composant électronique (1), les tableaux étant de longueurs différentes.

7. Procédé d'authentification dans lequel on met en oeuvre un procédé de traitement comparatif selon l'une des revendications précédentes, les données d'entrée (EPR) comparées aux données secrètes de contrôle (PIN) étant des codes (AUTH) à authentifier.

8. Composant (1) électronique d'authentification comprenant une mémoire (12) dans laquelle sont stockées des données secrètes de contrôle (CTRL, PIN) principales, un processeur (11), le composant électronique étant **caractérisé en ce que** le processeur (11) est programmé pour mettre en oeuvre le procédé selon l'une des revendications précédentes.

**Patentansprüche**

1. Vergleichendes gesichertes Verarbeitungsverfahren, des Typs, bei dem ein Prozessor (11) eines elektronischen Bauteils (1) einen Testdatensatz (EPR, AUTH), den er am Eingang empfängt, mit gesicherten Hauptdaten (CTRL, PIN), die in dem elektronischen Bauteil (1) gespeichert sind, vergleicht (101), **dadurch gekennzeichnet, dass** der Prozessor (11) parallel zu dem Vergleich (101) mit den geheimen Daten (CTRL, PIN) eine Reihe komplementärer Vorgänge auf dem Testdatensatz (EPR, AUTH) ausführt (300), die auf dem elektronischen Bauteil (1) eine Verhaltensvariation erzeugen, die von den Testdaten (EPR, AUTH) abhängt, die es am Eingang empfängt, und sich zu der Verhaltensvariation in Zusammenhang mit dem Vergleich mit gesicherten Hauptdaten (CTRL, PIN) hinzufügt, wobei die Reihe komplementärer Vorgänge, die ausgeführt wird (300), eine Reihe von Basisvorgängen umfasst, die K Mal wiederholt wird, und wobei dem Ausführen (300) der Reihe eine Einstellung (200) von Ausführungsparametern der Reihe vorangeht, wobei die Parameter Folgendes umfassen:

- den Identifikator (0) der Reihe von Basisvorgängen, die auszuführen ist, wobei die Reihe von Basisvorgängen in einem Bereich vordefinierter Basisoperationen liegt,
- die Anzahl K von Ausführungen der Reihe von Basisoperationen,

wobei die eingestellte Einheit von Ausführungsparametern (0, K) für den Testdatensatz, der von dem elektronischen Bauteil (1) empfangen wird, spezifisch ist.

2. Verfahren nach Anspruch 1, wobei die Einheit von Ausführungsparametern (0, K, T) auch eine Wartefrist (T) zwischen zwei aufeinanderfolgenden Ausführungen des Basisvorgangs, der K Mal wiederholt wird, umfasst.

3. Verfahren nach einem der Ansprüche 1 und 2, wobei der Testdatensatz aus M Werten besteht, und die Ausführungsparameter in der Anzahl N niedriger sind als M, wobei jeder Ausführungsparameter (0, K, T) als Bild durch eine jeweilige Injektivfunktion eines oder mehrerer Parameter, die mit dem Parameter aus den M Werten zusammenhängen, berechnet wird (202).

4. Verfahren nach Anspruch 3, wobei die M Werte ein erster (P1), zweiter (P2), dritter (P3) und vierter (P4) ganzzahliger Wert jeweils zwischen 0 und L sind, wobei N=3, und:

- ein erster der Ausführungsparameter (0, K, T) gleich

```
aP1 + bP2 ist,
```

wobei a und b zwei erste ganzzahlige Koeffizienten sind, von welchen mindestens einer größer ist als L+1, so dass a und b gegenseitig Primzahlen sind,
- ein zweiter der Ausführungsparameter (0, K, T) gleich dem dritten Wert (P3) multipliziert mit einem zweiten vorbestimmten Koeffizienten (c) ist, und
- der dritte der Ausführungsparameter (0, K, T) gleich dem vierten Wert (P4) multipliziert mit einem dritten vorbestimmten Koeffizienten (d) ist.

5. Verfahren nach einem der Ansprüche 3 und 4, wobei mindestens einer der Koeffizienten (a, b, c, d) bei jedem neuen Testdatensatz, der von dem elektronischen Bauteil (1) empfangen wird, variiert.

6. Verfahren nach einem der Ansprüche 4 und 5, wobei jeder variable Koeffizient (a, b, c, d) durch zirkuläres Lesen einer dazugehörenden Tabelle von Koeffizienten, die in dem elektronischen Bauteil (1) gespeichert ist, ausgewählt wird (201), wobei die Tabellen unterschiedliche Längen haben.

7. Authentifizierungsverfahren, wobei man ein vergleichendes Verarbeitungsverfahren nach einem der vorhergehenden Ansprüche umsetzt, wobei die Eingangsdaten (EPR), die mit den geheimen Prüfdaten (PIN) verglichen werden, zu authentifizierende Codes (AUTH) sind.

8.  Elektronisches Authentifizierungsbauteil (1), das einen Speicher (12) umfasst, in dem geheime Hauptprüfdaten (CTRL, PIN) gespeichert sind, einen Prozessor (11), wobei das elektronische Bauteil **dadurch gekennzeichnet ist, dass** der Prozessor (11) programmiert ist, um das Verfahren nach einem der vorhergehenden Ansprüche umzusetzen.

**Claims**

1.  Secure comparative processing method of the type wherein a processor (11) of an electronic component (1) compares (101) a set of test data (EPR, AUTH) that it receives via input with main secret data (CTRL, PIN) stored in said electronic component (1), **characterised in that** the processor (11) executes (300), in parallel to the comparison (101) with the secret data (CTRL, PIN), a series of additional operations on the set of test data (EPR, AUTH) which generate on the electronic component (1) a variation in behaviour which is a function of the test data (EPR, AUTH) that it receives via input and that is added to the variation in behaviour linked to the comparison with the main secret data (CTRL, PIN), the executed (300) series of additional operations comprising a sequence of basic operations repeated K times, and the execution (300) of said series being preceded by an adjustment (200) of execution parameters of said series, the parameters comprising:

    - the identifier (0) of the sequence of basic operations to be executed, the sequence of basic operations being contained in a set of predefined basic operations,
    - the number K of executions of the sequence of basic operations, the set of adjusted execution parameters (0, K) being specific to the set of test data received by the electronic component (1).

2.  Method according to claim 1, wherein the set of execution parameters (0, K, T) further comprises a wait period (T) between two successive executions of the basic operation repeated K times.

3.  Method according to one of claims 1 and 2, wherein the set of test data consists of M values, and the execution parameters are present in a number N that is less than M, each execution parameter (0, K, T) being calculated (202) as the image, by a respective injective function, of one or more values associated with said parameter among the M values.

4.  Method according to claim 3, wherein the M values are first (P1), second (P2), third (P3) and fourth (P4) integer values each between 0 and L, wherein N=3, and:

    - a first of the execution parameters (0, K, T) is equal to

    $$aP1 + bP2,$$

    where a and b are two first integer coefficients, at least one of which is greater than L+1 such that a and b are prime to one another,
    - a second of the execution parameters (0, K, T) is equal to the third value (P3) multiplied by a second predetermined coefficient (c), and
    - the third of the execution parameters (0, K, T) is equal to the fourth value (P4) multiplied by a third predetermined coefficient (d).

5.  Method according to one of claims 3 and 4, wherein at least one of the coefficients (a, b, c, d) varies with each new set of test data received by the electronic component (1).

6.  Method according to one of claims 4 and 5, wherein each variable coefficient (a, b, c, d) is selected (201) by circular reading of an associated table of coefficients stored in the electronic component (1), the tables being of different lengths.

7.  Authentication method wherein a comparative processing method according to one of the previous claims is implemented, the input data (EPR) compared with the control secret data (PIN) being codes (AUTH) to be authenticated.

8.  Electronic authentication component (1) comprising a memory (12) in which main control secret data (CTRL, PIN) is stored, and a processor (11), the electronic component being **characterised in that** the processor (11) is programmed to implement the method according to one of the previous claims.

## FIG. 1

## FIG. 2

# FIG. 3

```
200 {
        ┌─────────────────────────────────┐
        │   Détermination de coefficients  │──201
        └─────────────────────────────────┘
                        │ a,b,c,d
                        ▼
        ┌─────────────────────────────────┐
        │   Calcul des paramètres d'exécution │──202
        └─────────────────────────────────┘
                        │ O,K,T
                        ▼
        ┌─────────────────────────────────┐
        │ Identification d'une opération de base │──302
        └─────────────────────────────────┘
                        │ K,T
                        ▼
300 {   ┌─────────────────────────────────┐
        │   Exécution de l'opération de base │──303
        └─────────────────────────────────┘
                        │ T
  K fois               ▼
        ┌─────────────────────────────────┐
        │             Attente              │──304
        └─────────────────────────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2813468

**Littérature non-brevet citée dans la description**

- **T. PLOS et al.** Evaluation of Side-Channel Preprocessing Techniques on Crptographic-Enabled HF and UHF RFID-Tag Prototypes. *Workshop on RFID Security 2008 (RFIDSec08),* 11 Juillet 2008

- **B. CHEVALIER et al.** *Low-Cost Solutions for Preventing Simple Side-Channel Analysis,* 12 Novembre 2003